Europäisches Patentamt

European Patent Office

Office européen des brevets

(11) Publication number: **0 270 172 B1**

# EUROPEAN PATENT SPECIFICATION

(45) Date of publication of patent specification: **26.08.92**   (51) Int. Cl.5: **H04L 27/14**

(21) Application number: **87202315.5**

(22) Date of filing: **25.11.87**

(54) **Frequency discriminator for a coherent optical transmission system.**

(30) Priority: **28.11.86 NL 8603034**

(43) Date of publication of application:
**08.06.88 Bulletin 88/23**

(45) Publication of the grant of the patent:
**26.08.92 Bulletin 92/35**

(84) Designated Contracting States:
**DE FR GB IT SE**

(56) References cited:
**DE-B- 1 173 521**
**GB-A- 641 915**
**US-A- 2 644 036**

(73) Proprietor: **N.V. Philips' Gloeilampenfabrieken**
**Groenewoudseweg 1**
**NL-5621 BA Eindhoven(NL)**

(72) Inventor: **Hooijmans, Pieter Werner**
**c/o INT. OCTROOIBUREAU B.V. Prof. Holst-**
**laan 6**
**NL-5656 AA Eindhoven(NL)**

(74) Representative: **Bakker, Hendrik et al**
**INTERNATIONAAL OCTROOIBUREAU B.V.**
**Prof. Holstlaan 6**
**NL-5656 AA Eindhoven(NL)**

## Description

The invention relates to a frequency discriminator for a coherent optical transmission system, comprising an input for supplying a FSK input signal having the frequencies F(1) and F(2), the input of the frequency discriminator being coupled to a first and a second amplifier, an output of the first and the second amplifier being coupled to a first and a second transmission line respectively and to a first and a second rectifier respectively.

Coherent optical transmission systems are attractive as future systems with wide repeater spacing and large information capacity. The coherent optical transmission systems, wherein phase or frequency modulation and optical heterodyne or homodyne detection schemes are used offer the great advantage that the power of the receiver can be much smaller than is customary in the conventional PCM intensity-modulated systems.

Such a frequency discriminator is known from GB-A 641,915.

The known frequency discriminator consists of two amplifiers having each a transmission line ad a rectifier connected to its output. The combination of amplifier and transmission line act as a frequency to voltage converter. The rectifier determines the amplitude of the signal across the terminals of the transmission line, which amplitude is a measure for the frequency of the input signal of the frequency discriminator.

In the output signal of this frequency discriminator an unwanted signal having the same frequency as the input signal of the frequency discriminator is always present. When the frequency discriminator has to be used for wideband baseband signals, a complex filter has to be used to filter out the unwanted signal without affecting the wanted baseband signal.

The invention has for its object to provide a frequency discriminator according to the preamble in which the complexity of the filter needed to filter out the unwanted signal is reduced.

Therefore the frequency discriminator is characterised in that the amplifiers are amplifiers with two differential outputs, in that the first transmission line is a short-circuited transmission line having a length of approximately $\lambda(1)/4$, with $\lambda(1)$ representing the wavelength corresponding to a frequency F(1), in that the second transmission line (13) is a short-circuited transmission line having a length of approximately $\lambda(2)/4$, with $\lambda(2)$ representing the wavelength corresponding to a frequency F(2), in that the rectifiers are full-wave rectifiers, in that a further output of the first amplifier is coupled to a further input of the first full-wave rectifier and to a transmission line equal to the first transmission line, in that a further output of the second amplifier is coupled to a further input of the second full-wave rectifier and to a transmission line equal to the second transmission line, the shortcircuited ends of the transmission lines being coupled to a point of constant potential via a capacitor, the output of the first full-wave rectifier being coupled to an open transmission line having a length of approximately $\lambda(1)/8$ and in that the output of the second full-wave rectifier is coupled to an open transmission line having a length of approximately $\lambda(2)/8$.

These measures result in a fully balanced circuit which enable to use full-wave rectifiers. By using full-wave rectifiers the frequency of the unwanted signal is doubled. Consequently the frequency difference between the unwanted signal and the wanted baseband signal is larger so suppression of the unwanted signal without affecting the wanted baseband signal is more easy. This filtering can now be performed by two $\lambda/8$ transmission lines.

It is observed that US-A-2,644,036 discloses a frequency discriminator is disclosed which contains a full-wave rectifier consisting of four diodes. This circuit however requires the use of a transformer which is prohibitive for easy integration.

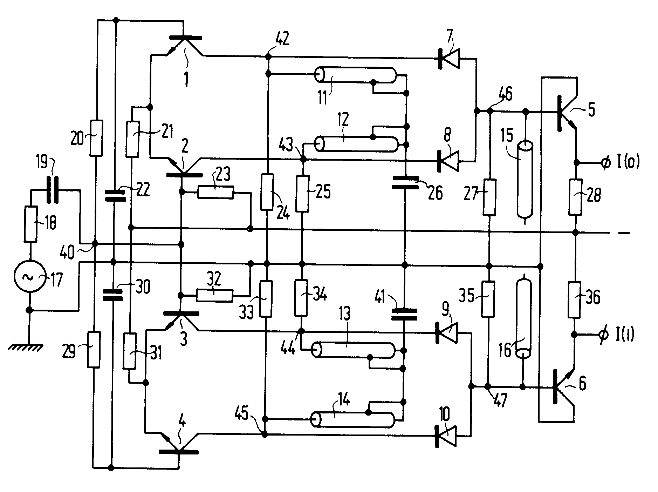

The invention will now further be described with reference to the Figure.

The emitter-coupled transistors 1 and 2 together form the first differential stage. The collector of transistor 1 is connected to the input 42 of the full-wave rectifier formed by the two diodes 7 and 8. The collector of the transistor 2 is connected to the input 43 of the full-wave rectifier. The respective inputs 42 and 43 of the full-wave rectifier are connected to capacitor 26 via the short-circuited transmission lines 11 and 12, the remaining connecting point of the capacitor being connected to earth. The anodes of the diodes 7 and 8 are interconnected. The junction point 46 forms the output of the full-wave rectifier and is connected to the base of the transistor 5 connected as an emitter follower. The base of transistor 5 is on the one side connected to the open transmission line 15 and on the other connected to earth via a resistor 27. The emitter of the transistor 5 is connected to a point of negative potential via the resistor 28. The detected signal going with the frequency F(1) can be taken off at point I(0). The collector of the transistor 1 is connected to earth via the resistor 24 and the collector of transistor 2 is connected to earth via the resistor 25. The base of transistor 2 is directly connected to the input 40 of the discriminator and the base of transistor 1 is connected to the input 40 of the discriminator via resistor 20, the FSK input signal being applied to the discriminator via the source 17, the resistor 18 and the capacitor 19. The base of the transistor 1 is connected to earth via capacitor 22. The emitters of transistors 1 and 2 are connected to a point of negative potential via resistor 21, this point being connected to the base of transistor 2 via resistor 23.

The emitter-coupled transistors 3 and 4 together form the second differential stage. The collector of transistor 3 is connected to the input 44 of the full-wave rectifier formed by the diodes 9 and 10. The collector 4 is connected to input 45 of the full-wave rectifier. The respective inputs 44 and 45 of the full-wave rectifier are connected to the capacitor 41 via the short-circuited transmission lines 13 and 14, the remaining connecting point of the capacitor being connected to earth. The anodes of the diodes 9 and 10 are interlinked. The junction point 47 forms the output of the full-wave rectifier and is connected to the base of the transistor 6 switched as an emitter follower. The one side of the transistor 6 is connected to the open transmission line 16 and the other side is connected to earth via resistor 35. The emitter of the transistor 6 is connected to a point of negative potential via resistor 36. The detected signal going with the frequency F-(2) can be received from point I(1). The collector of the transistor 4 is connected to earth via resistor 33 and the collector of transistor 3 is connected to earth via resistor 34. The base of the transistor 3 is directly connected to the input 40 of the discriminiator and the base of transistor 4 is connected thereto via resistor 29. The base of the transistor 4 is connected to earth via capacitor 30. The emitters of the transistors 3 and 4 are connected to a point of negative potential via resistors 31. The base of transistor 3 is connected to earth via resistor 32.

The signal source 17 delivers a FSK signal, composed of a series of signals having a frequency F(1) and signals having a frequency F(2). For example, the frequency F(1) is equal to 750 MHz and represents a logic 0. For example, the frequency F(2) is equal to 1500 MHz and represents a logic 1. The asymmetrical FSK input signal is converted into two symmetrical FSK signals by means of the first differential stage (1,2) and the second differential stage (3,4). With the aid of the short-circuited transmission lines 11 and 12 working as a band filter and having a length of approximately $\lambda(1)/4$, wherein $\lambda(1)$ represents the wavelength going with the frequency F(1), the signals of frequency F(1) are filtered out of the symmetrical FSK signal. These filtered signals are subsequently rectified in the full-wave rectifier formed by the diodes 7 and 8. The rectified signal is subsequently supplied to the base of the transistor 5 connected as an emitter follower and acting as a buffer stage between the output 46 of the full-wave rectifier and the output I(0), from which the logic output signal is received. By means of the transmission line 15, having a length of approximately $\lambda(1)$-/8 the double frequency 2F(1), always appearing in full-wave rectifying, is filtered out.

By means of the short-circuited transmission lines 13 and 14 working as a band filter the signals having the frequency F(2) are filtered out of the symmetrical FSK signal. Subsequently, these filtered signals are rectified in the full-wave rectifier formed by the diodes 9 and 10. The rectified signal is then supplied to the base of the transisitor 6 connected as an emitter follower and acting as a buffer stage between the output 47 of the ful-wave rectifier and the output I(1) from which the logic output signal is received. The double frequency 2F(2), always appearing in full-wave rectifying, is filtered out by means of the transmission line 16.

The balanced configuration of the FSK discriminator in accordance with the invention offers the advantage that the spurious capacitances which occur can be compensated for in a simple manner by accordingly changing the lengths of the transmission lines 11, 12, 13 and 14. To compensate for the aforementioned spurious capacitances in a discriminator already realized the length of the transmission lines 11 and 12 was made equal to $0.75 \lambda(1)/4$ and of transmission lines 13 and 14 equal to $0.6 \lambda(2)/4$.

A further advantageous feature is the fact that owing to the full-wave rectifying the second harmonic of the modulation frequency arises which is situated farther in the frequency domain than the modulation frequency and, consequently, can be filtered out in a fairly simple manner.

Customary values for the resistors and capacitors are, for example,:

```
Resistors:  20,21,24,25,29,31 -    100 Ω

Resistors:                  33,34 -    300 Ω

Resistors:                  27,35 -    150 Ω

Resistors:                  28,36 -    250 Ω

Resistor:                      23 -   1500 Ω

Resistor:                      32 -   3000 Ω

Capacitors 19,22,30,26,41      10 nanofarads
```

## Claims

1. A frequency discriminator for a coherent optical transmission system, comprising an input (40) for supplying a FSK input signal having the frequencies F(1) and F(2), the input of the frequency discriminator being coupled to a first (1,2) and a second amplifier (3,4), an output of the first (1,2) and the second amplifier (3,4) being coupled to a first (11) ad a second transmission line (13) respectively and to an input of a first (7) and a second rectifier (9) respectively, characterized in that the amplifiers are amplifiers with two differential outputs (42,43;44,45), in that the first transmission line (11) is a short-circuited transmission line having a length of approximately $\lambda(1)/4$, with $\lambda(1)$ representing the wavelength corresponding to a frequency F(1), in that the second transmission line (13) is a short-circuited transmission line having a length of approximately $\lambda(2)/4$, with $\lambda(2)$ representing the wavelength corresponding to a frequency F(2), in that the rectifiers are full-wave rectifiers, in that a further output of the first amplifier is coupled to a further input of the first full-wave rectifier (8) and to a transmission line (12) equal to the first transmission line (11), in that a further output of the second amplifier is coupled to a further input of the second full-wave rectifier (10) and to a transmission line (14) equal to the second transmission line (13), the shortcircuited ends of the transmission lines (11,12;13,14) being coupled to a point of constant potential via a capacitor (26;41), the output of the first full-wave rectifier (7,8) being coupled to an open transmission line (15) having a length of approximately $\lambda(1)/8$ and in that the output of the second full-wave rectifier (9,10) is coupled to an open transmission line (16) having a length of approximately $\lambda(2)/8$.

2. Discriminator as claimed in Claim 1, characterized in that the first and the second amplifier comprise a first and a second differential stage respectively comprising two emitter coupled transistors (1,2;3,4), the collectors of the two emittercoupled transistors in the first (1,2) and the second amplifier (3,4) each being coupled to the open transmission line (15) corresponding to the respective amplifier via a diode (7,8), and in that of the emitter-coupled transistors (1,2;3,4) in the first and second amplifier one base is coupled directly to the input of the discriminator and one base is coupled to the input of the discriminator via a resistor (20).

## Patentansprüche

1. Frequenzdiskriminator für ein kohärentes optisches Übertragungssystem, mit einem Eingang (40) zur Zuführung eines FSK-Eingangssignals mit den Frequenzen F(1) und F(2), wobei der Eingang des Frequenzdiskriminators mit einem ersten (1,2) und einem zweiten Verstärker (3,4) gekoppelt ist, ein Ausgang des ersten (1,2) und des zweiten Verstärkers (3,4) mit einer ersten (11) bzw. zweiten Übertragungsleitung (13) und mit einem Eingang eines ersten (7) bzw. zweiten Gleichrichters (9) gekoppelt ist, dadurch gekennzeichnet, daß die Verstärker Verstärker mit zwei Differentialausgängen (42,43;44,45) sind, daß die erste Übertragungsleitung (11) eine kurzgeschlossene Übertragungsleitung mit einer Länge von ungefähr $\lambda(1)/4$ ist, wobei $\lambda(1)$ die einer Frequenz F(1) entsprechende Wellenlänge darstellt, daß die zweite Übertragungsleitung (13) eine kurzgeschlossene Übertragungsleitung mit einer Länge von ungefähr $\lambda(2)/4$ ist, wobei $\lambda(2)$ die einer Frequenz F(2) entsprechende Wellenlänge darstellt, daß die Gleichrichter Zweiweggleichrichter sind, daß ein weiterer Ausgang des ersten Verstärkers mit einem weiteren Eingang des ersten Zweiweggleichrichters (8) und mit einer Übertragungsleitung (12) gleich der ersten Übertragungsleitung (11) gekoppelt ist, daß ein weiterer Ausgang des zweiten Verstärkers mit einem weiteren Eingang des zweiten Zweiweggleichrichters (10) und mit einer Übertra-

4

gungsleitung (14) gleich der zweiten Übertragungsleitung (13) gekoppelt ist, wobei die kurzgeschlossenen Enden der Übertragungsleitungen (11,12;13,14) über einen Kondensator (26;41) mit einem Punkt konstanten Potentials gekoppelt sind, der Ausgang des ersten Zweiweggleichrichters (7,8) mit einer offenen Übertragungsleitung (15) gekoppelt ist, die eine Länge von ungefähr λ(1)/8 hat, und daß der Ausgang des zweiten Zweiweggleichrichters (9,10) mit einer offenen Übertragungsleitung (16) gekoppelt ist, die eine Länge von ungefähr λ(2)/8 hat.

2. Diskriminator nach Anspruch 1, dadurch gekennzeichnet, daß der erste und der zweite Verstärker eine erste und eine zweite Differentialstufe umfassen, die je zwei emittergekoppelte Transistoren (1,2;3,4) enthalten, wobei die Kollektoren der beiden emittergekoppelten Transistoren in dem ersten (1,2) und dem zweiten Verstärker (3,4) beide mit der dem jeweiligen Verstärker entsprechenden offenen Übertragungsleitung (15) über eine Diode (7,8) gekoppelt sind, und daß eine der Basen der emittergekoppelten Transistoren (1,2;3,4) in dem ersten und dem zweiten Verstärker direkt und eine der Basen über einen Widerstand (20) mit dem Eingang des Diskriminators gekoppelt ist.

**Revendications**

1. Discriminateur de fréquences pour un système de transmission optique cohérent, comprenant une entrée (40) destinée à fournir un signal d'entrée (MDF) possédant les fréquences F(1) et F(2), l'entrée du discriminateur de fréquences étant couplée à un premier (1, 2) et un second (3, 4) amplificateur, une sortie du premier (1, 2) et du second (3, 4) amplificateur étant couplée à une première (11) et une seconde (13) ligne de transmission respectivement et à une entrée d'un premier (7) et d'un second (9) redresseur respectivement, caractérisé en ce que les amplificateurs sont des amplificateurs comportant deux sorties différentielles (42, 43; 44, 45), en ce que la première ligne de transmission (11) est une ligne de transmission court-circuitée d'une longueur d'environ λ(1)/4, où λ(1) représente la longueur d'onde correspondant à une fréquence F(1), en ce que la seconde ligne de transmission (13) est une ligne de transmission court-circuitée d'une longueur d'environ λ(2)/4, où λ(2) représente la longueur d'onde correspondant à une fréquence F(2), en ce que les redresseurs sont des redresseurs double alternance, en ce qu'une autre sortie du premier amplificateur est couplée à une autre entrée du premier redresseur double alternance (18) et à une ligne de transmission (12) égale à la première ligne de transmission (11), en ce qu'une autre sortie du second amplificateur est couplée à une autre entrée du second redresseur double alternance (10) et à une ligne de transmission (14) égale à la seconde ligne de transmission (13), les extrémités court-circuitées des lignes de transmission (11, 12; 13, 14) étant couplées à un point de potentiel constant par l'intermédiaire d'un condensateur (26; 41), la sortie du premier redresseur double alternance (7, 8) étant couplée à une ligne de transmission aérienne (15) d'une longueur d'environ λ(1)/8 et en ce que la sortie du second redresseur double alternance (9, 10) est couplée à une ligne de transmission aérienne (16) d'une longueur d'environ λ(2)/8.

2. Discriminateur suivant la revendication 1, caractérisé en ce que le premier et le second amplificateur comprennent un premier et un second étage différentiel respectivement comprenant deux transistors couplés par les émetteurs (1, 2; 3, 4), les collecteurs des deux transistors couplés par les émetteurs dans le premier amplificateur (1, 2) et le second amplificateur (3, 4) étant chacun couplé à la ligne de transmission aérienne (15) correspondant à l'amplificateur respectif par l'intermédiaire d'une diode (7, 8) et en ce que des transistors couplés par les émetteurs (1, 2; 3, 4) dans le premier et le second amplificateur, une base est couplée directement à l'entrée du discriminateur et une base est couplée à l'entrée du discriminateur par l'intermédiaire d'une résistance (20).

5